# EUROPEAN PATENT SPECIFICATION

(11) **EP 0 907 296 B1**
(45) Date of publication and mention of the grant of the patent: **01.03.2006**
(21) Application number: 97402301.2
(22) Date of filing: 01.10.1997
(51) Int. Cl.: H04Q 7/00, H04B 7/005, H04Q 7/32

(54) **Communications system, network, portable device and method**
Kommunikationssystem, Netzwerk, tragbare Vorrichtung und Verfahren
Système de communication avec du reseau, du dispositif portable et du procédé

(43) Date of publication of application: 07.04.1999
(73) Proprietor: MOTOROLA SEMICONDUCTEURS S.A., 31023 Toulouse Cédex (FR)
(72) Inventor: Abdesselem, Ouelid, 31000 Toulouse (FR); Songeon, Lionel, 31170 Tournefeuille (FR); McGarity, Ralph, 31000 Toulouse (FR)
(74) Representative: Cross, Rupert Edward Blount

(56) References cited:
- EP-A- 0 685 972
- EP-A- 0 985 279
- WO-A-96/37053
- US-A- 5 444 764
- US-A- 5 666 649

## Description

### Field of the Invention

This invention relates to a communications system, and particularly but not exclusively to a cellular communications system.

### Background of the Invention

In a cellular communications system, a number of portable devices within a cell typically communicate with a base station of the cell via a number of channels.

There is a desire to reduce the power consumption of portable devices, so as to increase the available 'on' time of the devices when operating with a battery.

A known problem with this arrangement is that typical base stations require portable devices within them to operate according to certain criteria which results in high power consumption. For example, a base station may require that all portable devices connected to it exhibit certain power characteristics, or transmit a location signal at regular intervals.

To mitigate this, it is known to control, from a base station of the system, the power output transmitted by a portable device, in response to received signal strength of the power output at the station. In this way the base station has an effect on the power consumption of the portable device.

Such systems are known, for example from WO 96/37053.

However, this does not have an effect on improving the power consumption of the portable device when it is not transmitting.

This invention seeks to provide a communications system, network, portable device and method which mitigate the above mentioned disadvantages.

### Summary of the Invention

According to a first aspect of the present invention there is provided apparatus for controlling power consumption of a portable communication device as claimed in claim 1.

According to a second aspect of the present invention there is provided a portable device as claimed in claim 6.

According to a third aspect of the present invention there is provided a method as claimed in claim 13.

In this way a communications system is provided in which the network is able to influence the power consumption of the portable device during various modes of operation.

### Brief Description of the Drawings

An exemplary embodiment of the invention will now be described with reference to the drawings in which:
FIG. 1 shows an exemplary embodiment of a communications system in accordance with the invention, and
FIG. 2 shows a power profile of a portable communications device forming part of the system of FIG. 1.

### Detailed Description of a Preferred Embodiment

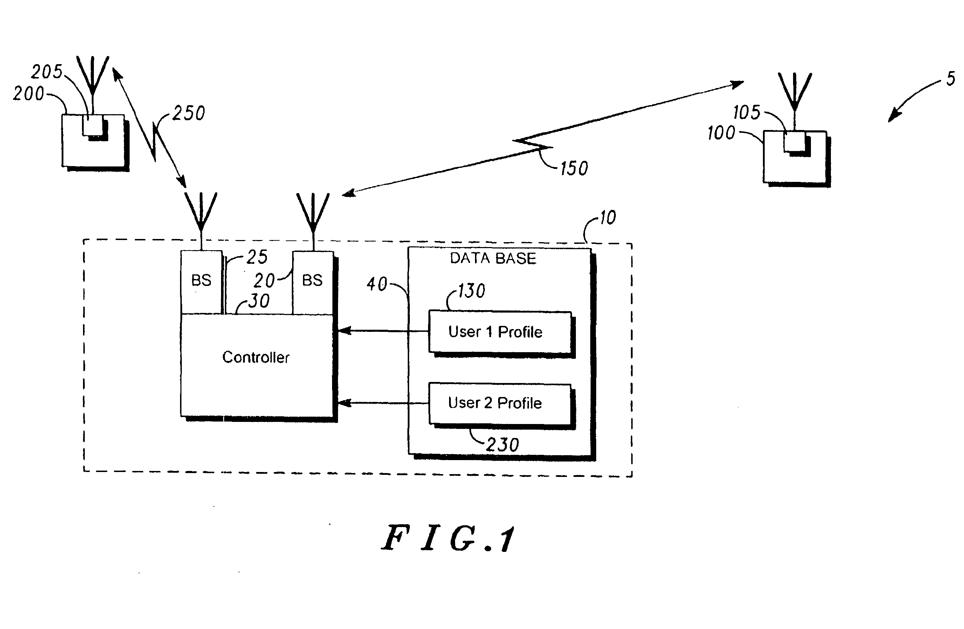

Referring to FIG. 1, there is shown a communications system 5, such as a Coded Digital Multiplexed Access (CDMA) cellular system. The communications system 5 including a network 10 and first and second mobile units 100 and 200 respectively.

The network 10 has a number of base stations, including the first base station 20 and the second base station 25, which provide an air interface with the first and second portable devices 100 and 200 respectively, over a plurality of radio frequency channels. The present invention may also be used in an arrangement wherein two mobiles operate in the same cell. In this case of single cell operation, the base station 20 and the base station 25 are the same.

The first portable device 100 has a power amplifier 105 and the second portable device 200 has a power amplifier 205. The power amplifiers 105 and 205 are arranged for transmitting on any selected one of the plurality of radio channels of the air interface.

The network 10 also has various infrastructure components, such as a controller 30, and a database 40. The controller 30 is arranged to manage the network 10 through controlling the activities of the first and second base stations 20 and 25 respectively.

In a preferred embodiment, the database 40 contains first and second user profile registers 130 and 230. These registers contain information about the users of the first and second portable devices 100 and 200 respectively such as the type of service, the quality of service, the target power consumption, mobility, talktime versus standby time, required and/or paid for by the user, and also information about the nature of the portable devices, to be further described below.

The user profile registers 130, 230, may also or alternatively be located in the respective portable devices. For example, the first user profile register 130 may be located in the first portable device 100 and the second user profile register 230 may be located in the second portable device 200. In the case where a portable device comprises a terminal and a Subscriber Identity Module (SIM) card, the user profile registers may be located in the terminal or in the SIM card or again in both. The information held in the user profile registers may then contain the technology parameters of the given terminal as well as the user profile of the given subscriber.

If possible, the information held in the user profile registers 130, 230 is preferably derived by statistical information gathered by the communication system and continuously updated.

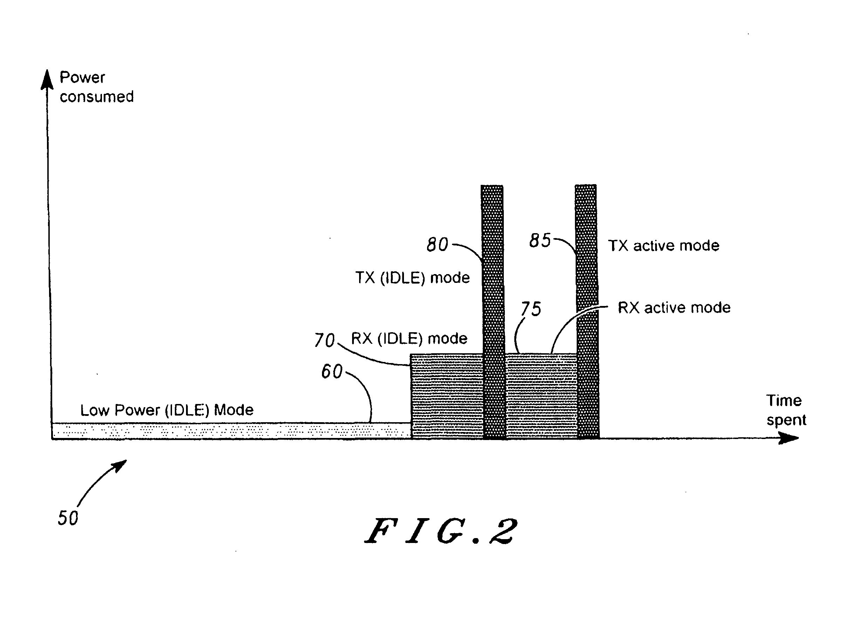

Referring now also to FIG. 2, there is shown an example of a power profile 50 of the portable device 100.

The power profile 50 relates to different modes of operation which are required by the network 10 for communication, and the power consumption of the portable device 100 for each mode. A low power (idle) mode of operation 60 occurs when the portable device 100 is not communicating over the air interface. The amount of power consumed in the low power mode 60 is dependent upon the technology within the portable device 100.

A receive (Rx) idle mode of operation 70 occurs when the portable device 100 is set to receive signalling transmissions from the network 10, over the air interface, such as paging messages. The amount of power consumed in the Rx idle mode 70 is dependent both upon the technology within the portable device 100, and also system parameters that may be sent by the network such as the type of modulation scheme chosen by the network 10 for the signalling transmissions (since different schemes have different data transfer rates).
The number of signalling transmissions received in a given time will also influence the power consumption of the portable device 100, since this will determine the number of times the receive idle mode 70 will occur.

A transmit (Tx) idle mode of operation 80 occurs when the portable device 100 is set to transmit signalling transmissions to the network 10, over the air interface. The amount of power consumed in the Tx idle mode 80 is again partly dependent upon the technology within the portable device 100, but also upon the power output and efficiency determined for the power amplifier 105, and the type of modulation scheme. The number of signalling transmissions required from the portable device 100 will also influence the power consumption, since this will determine the number of times the receive idle mode 70 will occur. One type of signalling transmission required from the portable device 100 is a location update transmission, which enables the network 100 to know which base station will be used for traffic transmissions with the portable device 100.

A receive (Rx) active mode of operation 75 occurs when the portable device 100 is set to receive traffic transmissions from the network 10, over the air interface, such as voice transmissions. The amount of power consumed in the Rx active mode 75 is dependent both upon the technology within the portable device 100, and also system parameters that may be sent by the network such as the type of vocoder scheme chosen by the network 10 for the traffic transmissions (since different schemes have different data transfer rates), and by the traffic rate.

A transmit (Tx) active mode of operation 85 occurs when the portable device 100 is set to transmit traffic transmissions to the network 10, over the air interface. The amount of power consumed in the Tx active mode 85 is again partly dependent upon the technology within the portable device 100, but also upon the power output and efficiency determined for the power amplifier 105, the type of vocoder modulation scheme, and the traffic rate.

FIG. 2 represents a model with five modes of operation, but the invention applies whatever the number of modes of operation for the power profile. For example, a model with nine modes of operation may also be envisaged, including low power idle mode, receive idle mode, transmit idle mode, receive speech mode, transmit speech mode, receive low data rate mode, transmit low data rate mode, receive high data rate mode and transmit high data rate mode. A model with only one mode of operation may also be envisaged. The number of modes of operation may vary from one portable device to another in the communication system.

The power profile 50 is reflected by appropriate data values stored in the first user profile register 130 of the database 40. The data values indicate the amount of power consumed and the duration of power consumption for each of the above modes, and how the amounts and durations will differ if the network 10 should modify one or more of the schemes or rates of transmissions identified above.

For example, the data values may reflect that for the Rx idle mode 70, a certain amount of power is consumed by the portable device 100 for a given modulation scheme and a given signalling rate (the rate at which the network 10 requires the portable device 10 to listen to signalling transmissions), and how a change of the modulation scheme and/or signalling rate will affect the power consumption of the portable device 10.

The second user profile register 230 contains a similar power profile of the second portable device 200.

In operation, communication may be established between the first portable device 100 and the base station 20 using a first channel 150, and between the second portable device 200 and the base station 25 using a second channel 250.

In the present invention, the first and second user profile registers 130 and 230 are used by the controller 30, to dynamically modify a default communication scheme in different ways for each of the first and second channels 150 and 250, thereby influencing the power consumption of the first and second mobiles 100 and 200.

The controller 30 may contain a microprocessor (not shown) arranged to perform an algorithm which determines modifications for each of the first and second channels 150 and 250. The algorithm may be arranged to optimise the power efficiency of every portable device within a given cell of the network 100, or to optimise the efficiency of certain users, for example those who pay a higher premium subscription.

In one example, a user who has paid a premium subscription may not be required to perform a location update signalling transmission at all. The result will be that an announcement of an incoming call, instead of being routed to one base station, will be broadcast over the whole network 10. This would be impossible to do for every user of the network 10, but premium subscribers could have this facility, thereby reducing the power consumption of their portable devices.

Alternatively, the algorithm may be arranged to arbitrate for power efficiency between portable devices.

In another example, an algorithm may be arranged to identify the mode of operation which has the most significant impact on the total power consumption and to then optimise the communication scheme or system parameters for this particular mode, and relax the communication scheme or system parameters for the other modes. As an example, if the portable device is an old device, and if the talktime is negligible compared to the standby time, then the low power idle mode may be the main contributor to the total power consumption. In this case, the algorithm may operate to relax all the system parameters for this specific device. Also, in this specific case, the baseband processing with high quality of service may be chosen. This will have low impact on the total power consumption.

Even if the above algorithm is used, the user profile may still indicate user preferences which would modify the algorithm. For example, the user may request to optimise only the idle mode. In this case, the alogrithm will optimise the idle modes and relax the traffic modes.

The invention may also be used in GSM systems to decide whether one of the HR, FR, EHR, or EFR communication schemes may be chosen, according to the impact of the traffic modes of operation on the total power consumption.

The information held in the user profile registers may include information on the remaining battery life of a portable device. This may be either monitored in the network, or sent as information by the portable device. When the battery life is low, the network may optimise drastically the power consumption in the device.

The communication schemes or system parameters of different devices may be modified differently for each device. The modifications to a communication scheme of a device can be transmitted on a dedicated signalling channel or a broadcast signalling channel. In the latter case, several types of portable devices are defined. The values of the system parameters for each type of portable device are broadcasted and a device retrieves the appropriate values corresponding to its own type.

As mentioned above, the user profile registers may be located in the network and/or in the portable devices. Whatever the location of the registers, a communication protocol between the registers and the network allows the algorithm in the network to use the values stored in the user profile registers.

It will be appreciated that alternative embodiments to the one described above are possible. For example, the database 40 may be incorporated in the controller 30, or in another part of the network 10.

## Claims

1. Apparatus for controlling the power consumption of a portable communication device (100) operating in a communications system (5), said device (100) being capable of operating according to a communication scheme defined by system parameters, the apparatus being **characterised by**:
a database (40) containing data values indicating power consumption for different system parameters for at least one mode of operation of the device (100),
and further including means (30) for modifying the communication scheme of the device (100) by selecting system parameters according to the data values for the at least one mode so as to, in operation, control the power consumption of the device (100).

2. Apparatus according to claim 1 in which the system parameters include one or more of the following parameters:
type of modulation;
signalling rate;
type of vocoder scheme.

3. Apparatus according to either preceding claim in which the database (40) further includes at least one of the following features:
quality of service;
mobility;
type of service;
talktime versus standby time;
remaining battery life.

4. Apparatus according to claim 3 in which the means (30) for modifying is adapted to reduce the power consumption of the portable communication device (100) preferentially compared with a second portable communication device (200) included in the communications system (5), in accordance with the features of the portable communication device (100) included in the database (40).

5. Apparatus according to any preceding claim in which the database (40) is updated with statistical information relating to the portable communication device (100) and which is gathered by the communications system (5).

6. A portable communication device (100) capable of operating according to a communication scheme defined by system parameters and supported by a communications system (5) and **characterised by** having a target power consumption associated therewith, and by means for receiving, from a remote station (20), an instruction to modify the communication scheme of the device (100) by selecting system parameters according to the target power consumption and by means for modifying the system parameters of the device (100) to the selected system parameters such that power consumption of the device (100) is controlled.

7. A portable communication device (100) according to claim 6 and including a database containing data values indicating power consumption for different system parameters for at least one mode of operation of the device (100).

8. A portable communication device (100) according to claim 6 or 7 and including a database having features related to the device located therein.

9. A portable communication device (100) according to claim 7 or 8 in which the database is updated with statistical information gathered by the communications system (5).

10. A portable communication device (100) according to any one of claims 7, 8 or 9 and further including a SIM card in which is located said database.

11. A portable communication device (100) according to any of claims 7-10 in which the database includes information on the remaining battery life of the device (100).

12. A portable communication device (100) according to claim 11 and adapted to send the information on the remaining battery life for use by the communications system to control the power consumption of the device (100).

13. A method for controlling the power consumption of a portable communication device (100) operating in a communications system (5), said device (100) being capable of operating according to a communication scheme defined by system parameters, the method being **characterised by** the steps of:
maintaining a database (40) containing data values indicating power consumption for different system parameters for at least one mode of operation of the device (100),
and
modifying the communication scheme by selecting system parameters according to the data values for the at least one mode so as to, in operation, control the power consumption of the device (100).

14. Apparatus for controlling the power consumption of a portable communication device according to any one of claims 1-5, a portable communication device (100) according to any one of claims 6-12 or a method for controlling the power consumption of a portable communication device (100) according to claim 13, wherein the at least one mode of operation of the device (100) includes a signal transmission mode or a signal reception mode.

## Patentansprüche

1. Einrichtung zum Steuern des Energieverbrauchs einer tragbaren Kommunikationsvorrichtung (100), die in einem Kommunikationssystem (5) arbeitet, wobei die Vorrichtung (100) in der Lage ist, gemäß einem Kommunikationsschema zu arbeiten, das durch Systemparameter definiert ist, wobei die Vorrichtung **gekennzeichnet ist durch**:
eine Datenbank (40), die Datenwerte enthält, die den Energieverbrauch für unterschiedliche Systemparameter für zumindest einen Betriebsmodus der Vorrichtung (100) anzeigen,
und dass sie weiterhin Mittel (30) zum Modifizieren des Kommunikationsschemas der Vorrichtung (100) **durch** ein Auswählen von Systemparametern gemäß den Datenwerten für den zumindest einen Modus umfasst, um, im Betrieb, den Energieverbrauch der Vorrichtung (100) zu steuern.

2. Einrichtung nach Anspruch 1, wobei die Systemparameter einen oder mehrere der folgenden Parameter umfassen:
Art der Modulation;
Signalisierungsrate;
Art des Vocoder-Schemas.

3. Einrichtung nach einem der vorhergehenden Ansprüche, wobei die Datenbank (40) weiterhin zumindest eines der folgenden Merkmale umfasst:
Qualität des Dienstes;
Mobilität;
Art des Dienstes;
Sprechzeit gegenüber Standbyzeit;
verbleibende Batteriezeit.

4. Einrichtung nach Anspruch 3, wobei die Mittel (30) zum Modifizieren dazu eingerichtet sind, den Energieverbrauch der tragbaren Kommunikationsvorrichtung (100) zu reduzieren, vorzugsweise im Vergleich mit einer zweiten tragbaren Kommunikationsvorrichtung (200), die in dem Kommunikationssystem (5) vorhanden ist, gemäß den Merkmalen der tragbaren Kommunikationsvorrichtung (100), die in der Datenbank (40) vorhanden ist.

5. Einrichtung nach einem der vorhergehenden Ansprüche, wobei die Datenbank (40) mit statistischen Informationen, welche die tragbare Kommunikationsvorrichtung (100) betreffen und die durch das Kommunikationssystem (5) erhoben werden, aktualisiert wird.

6. Tragbare Kommunikationsvorrichtung (100), die in der Lage ist, gemäß einem Kommunikationsschema zu arbeiten, das durch Systemparameter definiert ist, und die von einem Kommunikationssystem (5) unterstützt wird, **dadurch gekennzeichnet, dass** sie einen ihr zugeordneten Sollenergieverbrauch aufweist und dass Mittel zum Empfangen, von einer Fernstation (20), einer Instruktion vorhanden sind, das Kommunikationsschema der Vorrichtung (100) zu modifizieren, durch ein Auswählen von Systemparametern gemäß dem Sollenergieverbrauch, und durch Mittel zum Modifizieren der Systemparameter der Vorrichtung (100) zu den ausgewählten Systemparametern, so dass der Energieverbrauch der Vorrichtung (100) gesteuert wird.

7. Tragbare Kommunikationsvorrichtung (100) nach Anspruch 6, die eine Datenbank umfasst, die Datenwerte enthält, die den Energieverbrauch für unterschiedliche Systemparameter für zumindest einen Betriebsmodus der Vorrichtung (100) anzeigen.

8. Tragbare Kommunikationsvorrichtung (100) nach Anspruch 6 oder 7, die eine Datenbank mit Merkmalen umfasst, welche die darin angeordnete Vorrichtung betreffen.

9. Tragbare Kommunikationsvorrichtung (100) nach Anspruch 7 oder 8, wobei die Datenbank mit statistischen Informationen aktualisiert wird, die von dem Kommunikationssystem (5) erhoben werden.

10. Tragbare Kommunikationsvorrichtung (100) nach einem der Ansprüche 7 bis 9, die weiterhin eine SIM-Karte umfasst, in der sich die Datenbank befindet.

11. Tragbare Kommunikationsvorrichtung (100) nach einem der Ansprüche 7 bis 10, wobei die Datenbank Informationen über die verbleibende Batteriezeit der Vorrichtung (100) umfasst.

12. Tragbare Kommunikationsvorrichtung (100) nach Anspruch 11, dazu eingerichtet, die Informationen über die verbleibende Batteriezeit zur Verwendung durch das Kommunikationssystem zu senden, um den Energieverbrauch der Vorrichtung (100) zu steuern.

13. Verfahren zum Steuern des Energieverbrauchs einer tragbaren Kommunikationsvorrichtung (100), die in einem Kommunikationssystem (5) arbeitet, wobei die Vorrichtung (100) in der Lage ist, gemäß einem Kommunikationsschema zu arbeiten, das durch Systemparameter definiert wird, wobei das Verfahren durch die Schritte **gekennzeichnet** ist:
Unterhalten einer Datenbank (40), die Datenwerte enthält, die den Energieverbrauch für unterschiedliche Systemparameter für zumindest einen Betriebsmodus der Vorrichtung (100) anzeigen, und
Modifizieren des Kommunikationsschemas durch Auswählen von Systemparametern gemäß den Datenwerten für den zumindest einen Modus, um, im Betrieb, den Energieverbrauch der Vorrichtung (100) zu steuern.

14. Einrichtung zum Steuern des Energieverbrauchs einer tragbaren Kommunikationsvorrichtung nach einem der Ansprüche 1 bis 5, tragbare Kommunikationsvorrichtung (100) nach einem der Ansprüche 6 bis 12 oder Verfahren zum Steuern des Energieverbrauchs einer tragbaren Kommunikationsvorrichtung (100) nach Anspruch 13, wobei der zumindest eine Betriebsmodus der Vorrichtung (100) einen Signalübertragungsmodus oder einen Signalempfangsmodus umfasst.

## Revendications

1. Appareil pour commander la consommation de puissance d'un dispositif de communication portable (100) qui fonctionne dans un système de communication (5), ledit dispositif (100) pouvant fonctionner conformément à un schéma de communication qui est défini par des paramètres système, l'appareil étant **caractérisé par** :
une base de données (40) qui contient des valeurs de données qui indiquent une consommation de puissance pour différents paramètres système pour au moins un mode de fonctionnement du dispositif (100) ;
et incluant en outre un moyen (30) pour modifier le schéma de communication du dispositif (100) en sélectionnant des paramètres système conformément aux valeurs de données pour l'au moins un mode de manière à, en fonctionnement, commander la consommation de puissance du dispositif (100).

2. Appareil selon la revendication 1, dans lequel les paramètres système incluent un ou plusieurs des paramètres qui suivent :
type de modulation ;
débit de signalisation ;
type de schéma de vocodeur.

3. Appareil selon l'une quelconque des revendications précédentes, dans lequel la base de données (40) inclut en outre au moins l'une des caractéristiques qui suivent :
qualité de service ;
mobilité ;
type de service ;
temps de conversation en fonction du temps d'attente ;
durée de vie d'accumulateur restante.

4. Appareil selon la revendication 3, dans lequel le moyen (30) pour modifier est adapté pour réduire la consommation de puissance du dispositif de communication portable (100) de façon préférentielle par comparaison avec un second dispositif de communication portable (200) qui est inclus dans le système de communication (5), conformément aux caractéristiques du dispositif de communication portable (100) qui sont incluses dans la base de données (40).

5. Appareil selon l'une quelconque des revendications précédentes, dans lequel la base de données (40) est mise à jour à l'aide d'une information statistique qui se rapporte au dispositif de communication portable (100) et qui est collectée par le système de communication (5).

6. Dispositif de communication portable (100) pouvant fonctionner conformément à un schéma de communication qui est défini par des paramètres système et qui est supporté par un système de communication (5) et **caractérisé par le fait qu'**il présente une consommation de puissance cible qui lui est associée, par un moyen pour recevoir, depuis une station à distance (20), une instruction pour modifier le schéma de communication du dispositif (100) en sélectionnant des paramètres système conformément à la consommation de puissance cible et par un moyen pour modifier les paramètres système du dispositif (100) selon les paramètres système sélectionnés de telle sorte que la consommation de puissance du dispositif (100) soit commandée.

7. Dispositif de communication portable (100) selon la revendication 6 et incluant une base de données qui contient des valeurs de données indiquant une consommation de puissance pour différents paramètres système pour au moins un mode de fonctionnement du dispositif (100).

8. Dispositif de communication portable (100) selon la revendication 6 ou 7 et incluant une base de données qui comporte des caractéristiques qui sont rapportées au dispositif qui est localisé dedans.

9. Dispositif de communication portable (100) selon la revendication 7 ou 8, dans lequel la base de données est mise à jour à l'aide d'une information statistique qui est collectée par le système de communication (5).

10. Dispositif de communication portable (100) selon l'une quelconque des revendications 7, 8 ou 9 et incluant en outre une carte SIM dans laquelle est localisée ladite base de données.

11. Dispositif de communication portable (100) selon l'une quelconque des revendications 7 à 10, dans lequel la base de données inclut une information concernant la durée de vie d'accumulateur restante du dispositif (100).

12. Dispositif de communication portable (100) selon la revendication 11 et adapté pour envoyer l'information concernant la durée de vie d'accumulateur restante pour une utilisation par le système de communication pour commander la consommation de puissance du dispositif (100).

13. Procédé pour commander la consommation de puissance d'un dispositif de communication portable (100) fonctionnant dans un système de communication (5), ledit dispositif (100) pouvant fonctionner conformément à un schéma de communication qui est défini par des paramètres système, le procédé étant **caractérisé par** les étapes de :
maintien d'une base de données (40) qui contient des valeurs de données qui indiquent une consommation de puissance pour différents paramètres système pour au moins un mode de fonctionnement du dispositif (100) ; et
modification du schéma de communication en sélectionnant des paramètres système conformément aux valeurs de données pour l'au moins un mode de manière à, en fonctionnement, commander la consommation de puissance du dispositif (100).

14. Appareil pour commander la consommation de puissance d'un dispositif de communication portable selon l'une quelconque des revendications 1 à 5, dispositif de communication portable (100) selon l'une quelconque des revendications 6 à 12 ou procédé pour commander la consommation de puissance d'un dispositif de communication portable (100) selon la revendication 13, où l'au moins un mode de fonctionnement du dispositif (100) inclut un mode émission de signal ou un mode réception de signal.
